# EUROPÄISCHE PATENTANMELDUNG

(11) **EP 0 761 383 A2**
(43) Veröffentlichungstag der Anmeldung: **12.03.1997**
(21) Anmeldenummer: 96111072.3
(22) Anmeldetag: 10.07.1996
(51) Int. Cl.: B23Q 3/155, B23B 31/26

(54) **Werkzeugmaschine**

(30) Priorität: 02.09.1995 DE 19532397; 05.10.1995 DE 19537070
(71) Anmelder: CHIRON-WERKE GMBH & CO. KG, D-78532 Tuttlingen (DE)
(72) Erfinder: Schweizer, Anton Richard, 78573 Wurmlingen (DE); Grund, Peter Dr., 78647 Trossingen (DE)
(74) Vertreter: Otten, Hajo, Dr.-Ing.

(57) **Zusammenfassung**

Eine Werkzeugmaschine weist mindestens eine Spindel (13) zur drehfesten Aufnahme von Werkzeugen (31) auf. Spannmittel (70-74, 80-89) sind in Richtung der Achse (23) der Spindel (13) beweglich und dienen zum Einspannen des Werkzeugs (31) in einer Werkzeugaufnahme (67) der Spindel (13). Die Bewegung der Spannmittel (70-74, 80-89) wird in Richtung der Achse (23) durch Verdrehen der Spindel (13) bzw. ihres Spindelrotors (50) erzeugt.

## Beschreibung

Die Erfindung betrifft eine Werkzeugmaschine mit mindestens einer Spindel zur drehfesten Aufnahme von Werkzeugen, und mit in Richtung der Achse der Spindel beweglichen Spannmitteln zum Einspannen des Werkzeugs in einer Werkzeugaufnahme der Spindel.

Eine Werkzeugmaschine der vorstehend genannten Art ist aus der DE 32 33 934 C2 bekannt.

Bei der bekannten Werkzeugmaschine wird ein Werkzeughalter dadurch eingespannt, daß ein topfförmiges Element von oben auf den Kopf des Werkzeughalters auffährt und sich dort formschlüssig verrastet. Am oberen Ende des Elementes ist eine Zugstange angeordnet, mit der das topfförmige Element zusammen mit dem Werkzeughalter nach oben in die Werkzeugaufnahme eingezogen wird. Über ein Tellerfedernpaket wird die erforderliche Zugspannung permanent aufgebracht. Lediglich zum Lösen des Spannmechanismus wird das Tellerfedernpaket hydraulisch kurzzeitig überdrückt, damit das eingespannte Werkzeug gelöst und danach ein neues Werkzeug wieder eingespannt werden kann.

Bei der bekannten Werkzeugmaschine ist somit von Nachteil, daß während der gesamten Betriebsdauer des Werkzeugs ein kontinuierlicher axialer Zug durch den Spindelstock hindurch aufgebracht und aufrechterhalten werden muß.

Bei manchen Anwendungsfällen ist es jedoch wunschenswert, das eingespannte Werkzeug lediglich in der unmittelbaren Umgebung des Werkzeugs zu verspannen. Dies gilt insbesondere dann, wenn das Werkzeug am Spindelstock entlang einer weiteren Achse verschoben werden soll, wie dies z.B. bei einem Plandrehkopf der Fall ist.

Es ist bereits bekannt, bei Bearbeitungszentren derartige Aus- oder Plandrehköpfe einzusetzen. Hierunter versteht man Anordnungen, mit denen es z.B. möglich ist, größere Oberflächen an Werkstücken planzudrehen. Die Besonderheit bei diesen Plandrehköpfen besteht dabei darin, daß ein Plandrehwerkzeug in radialer Richtung zur Spindelachse verstellt werden kann, so daß der Drehdurchmesser variabel ist. Auf diese Weise erhält man bei numerisch gesteuerten Bearbeitungszentren eine weitere Achse.

Bei den bekannten Bearbeitungszentren mit Plandrehkopf wird z.B. der gesamte Plandrehkopf inklusive Plandrehwerkzeug montiert bzw. gegen einen kompletten neuen Plandrehkopf mit Plandrehwerkzeug ausgetauscht. Aufgrund des sehr hohen Gewichtes dieser Anordnungen geschieht dies regelmäßig durch manuelles Montieren. Der radiale Abstand der Schneide des Plandrehwerkzeugs von der Spindelachse wird dabei in der Regel ebenfalls manuell eingestellt.

Andererseits ist es auch bekannt, den Plandrehkopf an der Spindel der Werkzeugmaschine zu belassen, und die Plandrehwerkzeuge von Hand auszutauschen. Der Plandrehkopf weist in diesem Falle eine Werkzeugaufnahme mit einem Spreizglied zum formschlüssigen Ergreifen und Spannen von die Werkzeuge haltenden Werkzeughaltern auf, wobei das Spreizglied mittels eines Spindeltriebes betätigbar ist. Dieser Spindeltrieb wird nun von Hand dadurch betätigt, daß durch die den Plandrehkopf tragende Spindel hindurch, die zu diesem Zweck als Hohlspindel ausgebildet ist, eine Art Schraubendreher hindurchgesteckt und das Spreizglied angezogen oder zur Freigabe des Werkzeughalters gelöst wird. Die Werkzeughalter werden dabei von Hand in die Werkzeugaufnahme des Plandrehkopfes eingesetzt bzw. aus dieser entnommen.

Der Erfindung liegt die Aufgabe zugrunde, eine Werkzeugmaschine der eingangs genannten Art dahingehend weiterzubilden, daß auf konstruktiv einfache Weise ein automatisches Verspannen des Werkzeugs erreicht wird.

Diese Aufgabe wird erfindungsgemäß dadurch gelöst, daß die Bewegung der Spannmittel in Richtung der Achse durch Verdrehen der Spindel bzw. ihres Spindelrotors erzeugt wird.

Die der Erfindung zugrundeliegende Aufgabe wird damit vollkommen gelöst.

Dadurch, daß die Spindel bzw. ihr Spindelrotor, die bei einer numerisch gesteuerten Werkzeugmaschine sowieso mit einem gesonderten Antrieb versehen sind, zum Spannen des Werkzeuges über die Bewegung der Spannmittel verwendet werden, ergibt sich ein konstruktiv besonders einfacher Aufbau der neuen Werkzeugmaschine. Es ist z.B. vorstellbar, daß das von einem Greifer angebotene und in einem Werkzeughalter steckende Werkzeug durch den Greifer drehfest gegenüber der Spindel gehalten wird, so daß durch Drehen der Spindel der Werkzeughalter sozusagen in die Werkzeugaufnahme eingedreht wird. Andererseits ist es auch möglich, den Werkzeughalter zunächst in die Werkzeugaufnahme einzuführen, wo er durch geeignete Nutensteine etc. drehfest mit der Spindel bzw. dem Spindelrotor verbunden wird. Durch Drehen der Spindel und damit des Werkzeughalters wird dieser dann über eine geeignete Schraubverbindung verspannt.

In einer besonders bevorzugten Weiterbildung wird die Bewegung der Spannmittel in Richtung der Achse über einen Spindeltrieb erzeugt, der durch Verdrehen der Spindel bzw. ihres Spindelrotors betätigt wird.

Durch die Verwendung eines Spindeltriebes wird in vorteilhafter Weise das Werkzeug selbsthemmend in der Werkzeugaufnahme eingespannt, so daß keine Zugkräfte oder dgl. über eine lange Wegstrecke, bspw. in vertikaler Richtung durch den Spindelstock hindurch, aufgebracht und aufrechterhalten werden müssen. Die Werkzeugaufnahme kann daher weitgehend autonom ausgebildet werden, und es ist möglich, diese während des Betriebes der Werkzeugmaschine relativ zum Spindelstock zu verfahren.

Bei einer bevorzugten Weiterbildung der erfindungsgemäßen Werkzeugmaschine ist in der Werkzeugaufnahme ein Spreizglied zum formschlüssigen Ergreifen und Spannen des Werkzeugs vorgesehen, wobei der Spindeltrieb vorzugsweise durch einen Außengewindeabschnitt am Spreizglied sowie einen Innengewindeabschnitt an der Werkzeugaufnahme gebildet wird, die drehfest mit der Spindel bzw. ihrem Spindelrotor verbunden ist.

Diese Maßnahme hat den Vorteil, daß alle zum Einspannen des Werkzeuges erforderlichen Elemente in unmittelbarer Nähe der Werkzeugaufnahme angeordnet sind, so daß eine besonders kompakte und autonome Einheit entsteht.

Bei einer Weiterbildung dieses Ausführungsbeispiels weist das Spreizglied einen Mitnehmer auf, über den vorzugsweise der Außengewindeabschnitt relativ zu dem Innengewindeabschnitt verdrehbar ist.

Diese Maßnahme hat den Vorteil, daß durch eine einfache formschlüssige Kupplung der Spannvorgang von außen eingestellt werden kann.

Bei einer Weiterbildung dieses Ausführungsbeispiels ist der Mitnehmer mit einer Kuppelstange in Eingriff bringbar, die an einem Ende mit einem zum Mitnehmer komplementären Gegenstück versehen ist.

Diese Maßnahme hat den Vorteil, daß das Spreizglied auch von einem weiter entfernt liegenden Punkt verstellt oder sonstwie betätigt werden kann.

Dies gilt vor allem dann, wenn die Kuppelstange mittels einer Kolben-Zylinder-Einheit axial verstellbar ist, derart, daß der Mitnehmer und das Gegenstück in Eingriff bzw. außer Eingriff bringbar sind.

Diese Maßnahme hat den Vorteil, daß das Spreizglied durch einfaches Betätigen der Kolben-Zylinder-Einheit vollkommen von den Betätigungselementen, nämlich der Kuppelstange, abgekoppelt werden kann, so daß z.B. die Werkzeugaufnahme mit angezogenem Spreizglied relativ zur Spindel und damit auch relativ zur Kuppelstange verfahren werden kann.

Bei einer bevorzugten Weiterbildung des letztgenannten Ausführungsbeispiels ist die Kuppelstange in der Achse der Spindel angeordnet.

Diese Maßnahme hat den Vorteil, daß ein sehr kompakter Aufbau entsteht. Andererseits hat diese Maßnahme den Vorteil, daß eine Betätigung des Spreizgliedes in einer Referenzposition möglich ist, die zugleich eine Zentrierposition relativ zu Spindelachse ist.

Bei weiteren Ausführungsbeispielen der Erfindung ist die Werkzeugaufnahme an einem Plandrehkopf ausgebildet und vorzugsweise numerisch gesteuert in einer Richtung senkrecht zur Achse der Spindel verstellbar ist.

Diese Maßnahme hat den Vorteil, daß eine weitere Achse in der radialen Verstellrichtung des Plandrehwerkzeuges dargestellt wird. Da das Plandrehwerkzeug autonom in der Werkzeugaufnahme eingespannt ist, kann es in einfacher Weise relativ zur Spindelachse verstellt werden, ohne daß dies einen Einfluß auf die Einspannung des Werkzeugs hat.

Bei einer bevorzugten Weiterbildung dieses Ausführungsbeispiels ist der Plandrehkopf derart verstellbar, daß der Mitnehmer und das Gegenstück in eine miteinander fluchtende Stellung bringbar sind.

Diese Maßnahme hat den Vorteil, daß z.B. durch numerische Steuerung sowohl eine beliebige Arbeitsstellung als auch eine solche Stellung anfahrbar sind, in der die Spannung des Werkzeugs gelöst werden kann, und zentrisch zu der Drehachse der Spindel zu betreibende Werkzeuge, z.B. Fräser, Bohrer etc., verwendet werden können.

Bei besonders bevorzugten Ausführungsbeispielen der Erfindung ist das Spreizglied drehfest fixierbar, derart, daß der Spindeltrieb durch Verdrehen der drehfest mit der Spindel bzw. dem Spindelrotor verbundenen Werkzeugaufnahme betätigt wird.

Diese Maßnahme hat den Vorteil, daß zum Einspannen des Werkzeugs lediglich die Werkzeugaufnahme gedreht werden muß, wozu ohnehin der Spindelantrieb vorhanden ist. Das Spreizglied braucht demgegenüber lediglich drehfest gehalten werden.

Bevorzugt ist ferner, wenn die Kuppelstange mit einer Kupplung zum wahlweisen drehfesten Arretieren der Kuppelstange versehen ist.

Diese Maßnahme hat den Vorteil, daß das gewünschte drehfeste Fixieren des Spreizgliedes in ebenfalls ferngesteuerter Weise über eine entsprechende Kupplung möglich ist.

In diesem Zusammenhang ist besonders bevorzugt, wenn die Kupplung eine Ratschkupplung mit einstellbarem Grenzwert des Halte-Drehmoments ist.

Diese Maßnahme hat den Vorteil, daß sowohl zum Einspannen als auch zum Ausspannen des Werkzeugs ein vorgegebenes Anzugsmoment einstellbar ist. So kann beim Einspannen des Werkzeugs z.B. ein Einspann-Drehmoment von 15 Nm vorgegeben werden, wobei beim Überschreiten des Grenzwertes die Kupplung ausrastet. Dieser Vorgang kann erfaßt werden, indem in weiterer bevorzugter Ausgestaltung der Erfindung ein Sensor zum Erkennen des Ratschvorganges vorgesehen ist. In entsprechender Weise kann beim Lösen des Werkzeugs ein weiterer Grenzwert des Drehmomentes, bspw. 25 Nm, vorgegeben werden, wobei auch dort ein Überschreiten des Grenzwertes über den Sensor erkennbar ist. Damit können der Beginn und das Ende des Spannvorganges sowie des Ausspannvorganges sicher erkannt werden, um die Werkzeugmaschine entsprechend zu steuern.

Weitere Vorteile ergeben sich aus der Beschreibung und der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine äußerst schematisierte Vorderansicht auf ein Ausführungsbeispiel einer erfindungsgemäßen Werkzeugmaschine;
- Fig. 2: in vergrößertem Maßstab eine Querschnittsdarstellung entlang der Linie II-II von Fig. 1;
- Fig. 3: eine noch weiter vergrößerte Detailansicht zur Erläuterung eines Werkzeugwechslers, wie er an der Werkzeugmaschine gemäß Fig. 1 und 2 Verwendung finden kann;
- Fig. 4: in noch weiter vergrößertem Maßstab eine Draufsicht auf einen Greifer in einem Werkzeugwechsler gemäß Fig. 3.

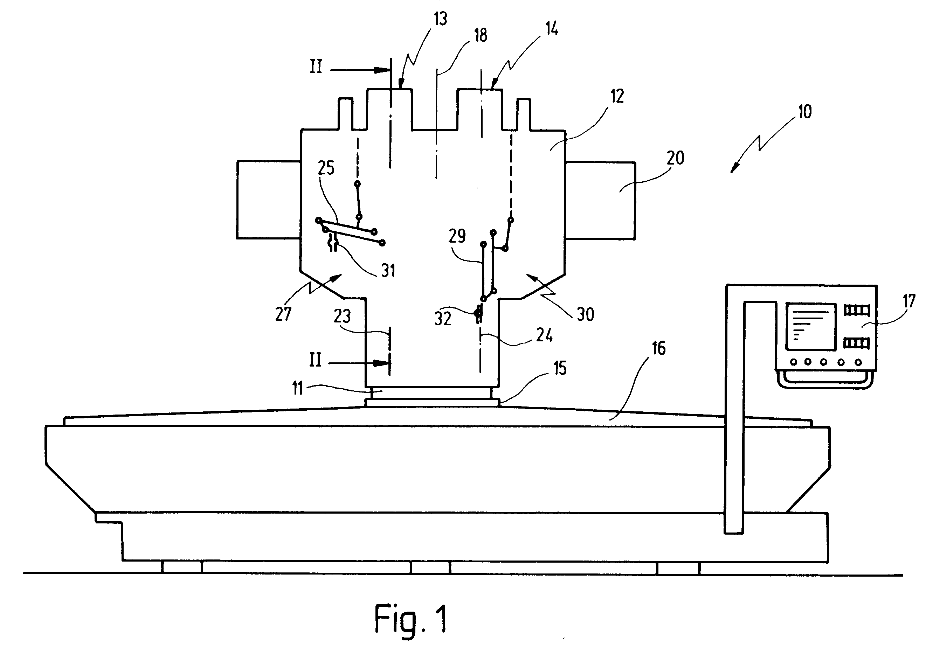

In Fig. 1 bezeichnet 10 insgesamt eine Werkzeugmaschine. Unter "Werkzeugmaschine" ist im vorliegenden Fall insbesondere ein sogenanntes Bearbeitungszentrum zu verstehen, d.h. eine numerisch gesteuerte Werkzeugmaschine, in der insbesondere Bohr-, Fräs- und Dreharbeiten ausgeführt werden. Bearbeitungszentren dieser Art verfügen entweder über ein Werkzeugmagazin, in dem eine Vielzahl unterschiedlicher Werkzeuge in Werkzeughaltern gespeichert sind, oder über eine große Zahl von Werkzeugwechslern, in denen die Werkzeuge zwischen zwei Rüstzeiten in deren Magazinstellung permanent gehalten sind. Mittels eines oder mehrerer solcher Werkzeugwechsler werden diese Werkzeuge je nach Bedarf in eine Spindel des Bearbeitungszentrums eingewechselt, damit ein bestimmter Bearbeitungsvorgang unter numerischer Kontrolle ablaufen kann. Nach Beendigung des jeweiligen Bearbeitungsschrittes wird das soeben benutzte Werkzeug ausgespannt und ein neues Werkzeug für den nächsten Bearbeitungsvorgang eingespannt. Bearbeitungszentren dieser Art sind allgemein bekannt.

Die Werkzeugmaschine 10 in Fig. 1 ist eine sogenannte Fahrständermaschine. Dabei ist ein Fahrständer 11 mit einem Spindelstock 12 versehen. Der Spindelstock 12 ist am Fahrständer 11 insbesondere in Vertikalrichtung verfahrbar.

Bei der in Fig. 1 dargestellten Werkzeugmaschine 10 ist der Spindelstock 12 mit zwei Spindeln, nämlich einer ersten Spindel 13 und einer zweiten Spindel 14, ausgerüstet.

Der Fahrständer 11 ist in der Darstellung der Fig. 1 auf einem Sockel 15 senkrecht zur Zeichenebene verfahrbar. Der Sockel 15 ist wiederum in der Darstellung der Fig. 1 nach rechts und nach links auf einem raumfesten Maschinenbett 16 verfahrbar. Insgesamt kann der Spindelstock 12 damit entlang von drei kartesischen Koordinaten verfahren werden.

Zur Steuerung des Bewegungsablaufs und des gesamten Bearbeitungsvorganges ist ein Steuerpult 17 vorgesehen, das zur numerischen Steuerung der Werkzeugmaschine 10 dient.

Der Spindelstock 12 ist zu einer mittleren Symmetrieachse 18 im wesentlichen symmetrisch ausgebildet. Die Spindeln 13, 14 sind vertikalachsig ausgebildet. Ihre Achsen sind in Fig. 1 mit 23 bzw. 24 bezeichnet.

In der Nähe der ersten Spindel 13 befindet sich ein erster Greifarm 25 eines ersten Werkzeugwechslers 27, während ein zweiter Greifarm 29 eines zweiten Werkzeugwechslers 30 sich in der Nähe der zweiten Spindel 14 befindet. Mittels der Greifarme 25, 29 können Werkzeuge 31 bzw. 32 beliebiger Art in die Spindeln 13 bzw. 14 eingewechselt werden. In der Darstellung der Fig. 1 ist jeder Spindel 13, 14 jeweils nur ein Greifarm 25 bzw. 29 zugeordnet. Es versteht sich jedoch, daß jeder Spindel 13, 14 mehrere abwechselnd wirkende Greifarme zugeordnet werden können, die jeweils ein Werkzeug 31, 32 tragen und zwischen einer Arbeitsstellung, in der sich das Werkzeug in der Spindel 13, 14 befindet, sowie einer Magazinstellung wechseln, in der sie von der Spindel 13, 14 zurückgezogen das Werkzeug 31, 32 für das nächste Einwechseln bereithalten.

Das Besondere bei der Werkzeugmaschine 10 besteht darin, daß die zweite Spindel 14 in herkömmlicher Weise für Bohr- und Fräsarbeiten ausgelegt ist, während die erste Spindel 13 mit einem Plandrehkopf versehen ist, um z.B. an den zu bearbeitenden Werkstücken bestimmte Oberflächen plandrehen oder Konturen ausdrehen zu können.

Selbstverständlich kann die Werkzeugmaschine 12 auch so ausgelegt sein, daß nur eine Spindel, nämlich die Spindel 13, vorgesehen ist, die einen Plan- oder Ausdrehkopf trägt, in den außer Ausdrehwerkzeugen auch "übliche" Werkzeuge wie Bohrer, Fräser etc. eingewechselt werden, wobei diese Werkzeuge im Ausdrehkopf natürlich zentrisch positioniert werden müssen.

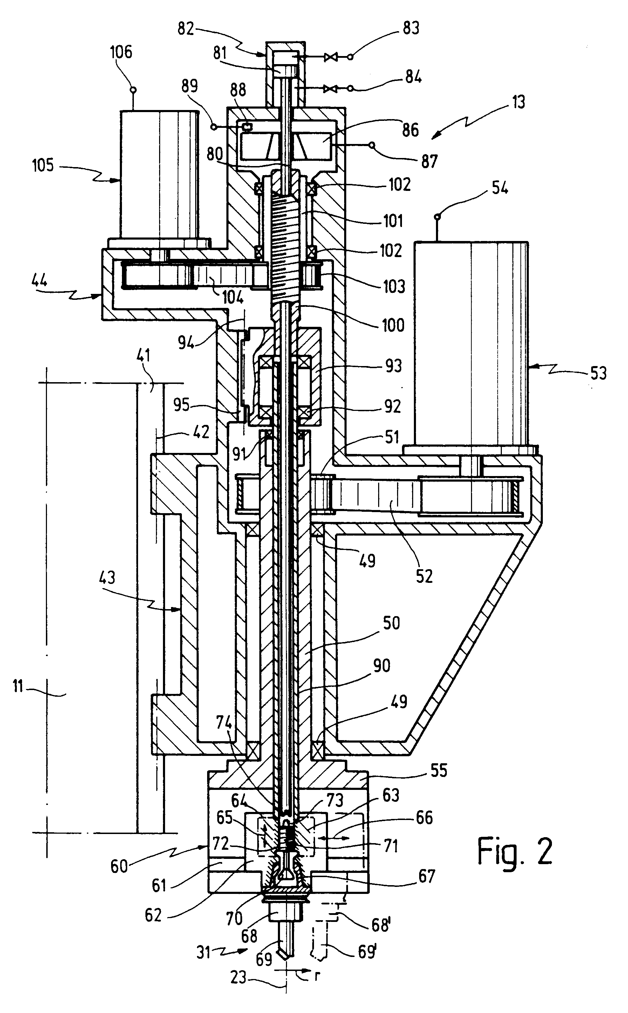

In der vergrößerten Querschnittsdarstellung gemäß Fig. 2 sind weitere Einzelheiten der ersten Spindel 13 zu erkennen.

Man erkennt zunächst, daß am Fahrständer 11 eine vertikale Schiene 41 angeordnet ist, auf der entlang einer vertikalen Achse 42 ein Schlitten 43 verfahrbar ist. Der Schlitten 43 trägt ein Spindelgehäuse 44. Die hierzu vorgesehenen Antriebs- und Steuereinheiten sind an sich bekannt und in Fig. 2 der Übersichtlichkeit halber nicht dargestellt.

Am unteren Ende des Spindelgehäuses 44 sind in einer zentralen Aufnahme derselben Lager 49 angebracht, die zur Lagerung eines Spindelrotors 50 dienen. Der Spindelrotor 50 ist in der Nähe seines oberen Endes drehfest mit einer Riemenscheibe 51 verbunden, die über einen Riemen 52 von einem Spindelantrieb 53 antreibbar ist. Über eine Steuerleitung 54 kann der Spindelrotor 50 damit in Drehung versetzt werden.

Das untere Ende des Spindelrotors 50 läuft in einen rotationssymmetrischen Flansch 55 aus. Der Flansch 55 dient zur Befestigung eines insgesamt mit dem Bezugszeichen 60 bezeichneten Plandrehkopfs.

Der Plandrehkopf 60 ist mit einer horizontal verlaufenden Schiene 61 versehen. Auf der Schiene 61 läuft ein Schlitten 62. Der Schlitten 62 ist mit einer in einer Vertikalebene wirkenden 45°-Verzahnung 63 versehen. Über eine Gegenverzahnung 64, deren Einzelheiten weiter unten noch erläutert werden, kann eine vertikale Bewegung (Pfeil 65) der Gegenverzahnung nach Art eines Keilgetriebes in eine horizontale Bewegung (Pfeil 66) der 45°-Verzahnung 63 umgesetzt werden. Die 45°-Verzahnung 63 und die Gegenverzannung 64 bilden somit ein Getriebe zur Umsetzung einer Vertikalbewegung in eine Horizontalbewegung.

Die vertikale Antriebsbewegung dient dazu, den Schlitten 62 auf dem Plandrehkopf in horizontaler Richtung (Pfeil 66) zu verschieben.

Am unteren Ende des Schlittens 62 ist eine Werkzeugaufnahme 67 von an sich herkömmlicher Bauart angeordnet. Die Werkzeugaufnahme 67 ist als Innenkegel ausgebildet und dient zur formschlüssigen Aufnahme eines Werkzeughalters 68, der an seinem oberen Ende als Norm-Hohlschaftkegel ausgebildet ist, der eine komplementäre Form zur Werkzeugaufnahme 67 aufweist.

Der Werkzeughalter 68 trägt an seinem unteren Ende hier ein Plandrehwerkzeug 69, obwohl auch ein "übliches" Werkzeug 31, 32 aufgenommen sein könnte. Wenn nun über das Getriebe 63/64 eine vertikale Antriebsbewegung in eine Horizontalbewegung des Schlittens 62 entlang der Schiene 61 umgesetzt wird, so wird das Plandrehwerkzeug 69 in einer Horizontalebene verfahren, wie mit 68', 69' in Fig. 2 angedeutet. Die Schneide des Plandrehwerkzeugs 69, die sich ursprünglich in der Achse 23 der Spindel 13 befand, bewegt sich auf diese in radialer Richtung r von der Achse 23 weg. Auf diese an sich bekannte Weise kann somit der Plandrehkopf 60 zum Abdrehen von Flächen mit unterschiedlichem Drehradius eingesetzt werden.

Die Werkzeugaufnahme 67 umfaßt ferner ein Spreizglied 70, das im ungespreizten Zustand an das obere Ende des Werkzeughalters 68 heran oder in dieses einführbar ist, während im gespreizten Zustand das Spreizglied 70 den Werkzeughalter 68 formschlüssig ergreift und in einer vertikalen Richtung in die Werkzeugaufnahme 67 hineinzuziehen und dort einzuspannen vermag.

Das Spreizglied 70 ist im oberen Bereich mit einem Außengewindeabschnitt 71 versehen. Der Außengewindeabschnitt 71 läuft in einem Innengewindeabschnitt 72 der Werkzeugaufnahme 67, d.h. im Schlitten 62. Die Gewindeabschnitte 71, 72 bilden somit einen Spindeltrieb.

Am oberen Ende läuft das Spreizglied 70 in einen Mitnehmer 73, bspw. eine horizontale Rippe, aus. Oberhalb des Mitnehmers 73 ist ein Gegenstück 74 zu erkennen, das in der Formgebung an den Mitnehmer 73 angepaßt ist.

Das Gegenstück 74 bildet das untere Ende einer Kuppelstange 80. Die Kuppelstange 80 ist in der Achse 23 der Spindel 13 angeordnet. Am oberen Ende läuft die Kuppelstange 80 in einem Kolben 81 einer Kolben-Zylinder-Einheit 82 aus. Die Einheit 82 ist mit Steuerleitungen 83, 84 versehen, um den Kolben 81 in vertikaler Richtung verfahren zu können.

Auf diese Weise ist es möglich, das Gegenstück 74 entweder vom Mitnehmer 73 abzuheben, wie in Fig. 2 dargestellt ist, oder das Gegenstück 74 mit dem Mitnehmer 73 in Eingriff zu bringen.

Die Kuppelstange 80 ist unterhalb ihres oberen Endes von einer Kupplung 86 umgeben, die ihrerseits mit einer Steuerleitung 87 versehen ist. Die Kupplung 86 ist raumfest angeordnet und dient dazu, die Kuppelstange 80 drehfest zu arretieren, wenn die Steuerleitung 87 mit einem entsprechenden Signal beaufschlagt ist.

Die Kupplung 86 ist als Ratschkupplung ausgebildet. Dies bedeutet, daß die Kupplung 86 bis zu einem einstellbaren Grenzwert des einwirkenden Drehmoments hält und dann löst, wobei das gehaltene Teil, nämlich die Kuppelstange 80, sich nur bis in die nächste Deckungsstellung der Ratschelemente verdrehen kann, bspw. um 180°, bis die Kupplung 86 erneut formschlüssig faßt.

Zur Detektion eines solchen Ratschvorganges dient ein Sensor 88, der oberhalb der Kupplung 86 angeordnet ist. Über eine Steuerleitung 89 kann vom Sensor 88 ein Steuersignal abgeleitet werden.

Zur Betätigung der Gegenverzahnung 64 dient eine Zustellstange 90, die als Rohr die Kuppelstange 80 umgibt.

Am unteren Ende läuft die Zustellstange 90 in die bereits erwähnte Gegenverzahnung 64 aus, die in Fig. 2 der Übersichtlichkeit halber nicht im einzelnen dargestellt ist.

Die Zustellstange 90 ist im oberen Ende des Spindelrotors 50 mittels Radiallagern 91 in radialer Richtung gehalten. Über Axiallager 92 ist die Zustellstange 90 in einem Schlitten 93 gehalten. Dies bedeutet, daß die Zustellstange 90 sich zwar im Schlitten 93 drehen, aber nicht gegenüber dem Schlitten 93 axial verschieben kann.

Der Schlitten 93 ist entlang einer vertikalen Achse 94 an einer Schiene 95 verfahrbar, die auf der Innenseite des Spindelgehäuses 44 ausgebildet ist.

Der Schlitten 93 ist an seiner Oberseite starr mit einer Kugelgewindespindel 100 verbunden, die die Kuppelstange 80 ebenfalls lose umgibt. Auf der Kugelgewindespindel 100 läuft eine Spindelmutter 101, die ihrerseits in Axiallagern 102 axial festgehalten wird.

Die Spindelmutter 101 ist an ihrem unteren Ende drehfest mit einer Riemenscheibe 103 verbunden. Die Riemenscheibe 103 wird wiederum mittels eines Riemens 104 von einem Zustellantrieb 105 angetrieben. Eine Steuerleitung 106 dient zur Steuerung des Zustellantriebes 105.

Die Wirkungsweise der Anordnung gemäß Fig. 2 ist wie folgt:

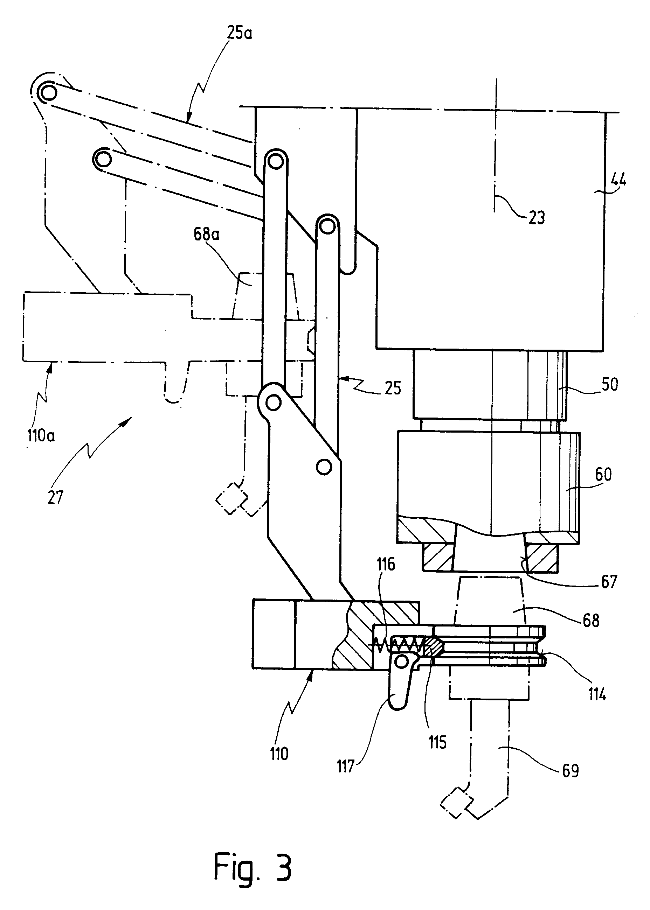

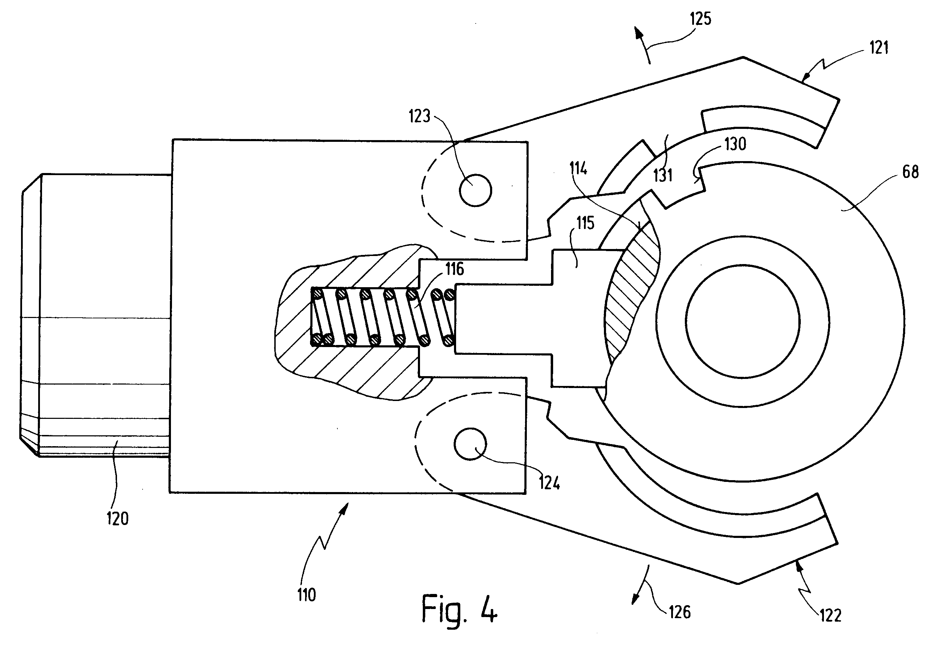

Wenn der Werkzeughalter 68 von unten in die Werkzeugaufnahme 67 eingeführt wird, welcher Vorgang weiter unten anhand der Fig. 3 und 4 noch näher beschrieben werden wird, gelangt das Spreizglied 70 in Eingriff mit dem Werkzeughalter 68. Durch Betätigen der Kolben-Zylinder-Einheit 82 wird nun die Kuppelstange 80 aus der in Fig. 2 eingezeichneten Stellung nach unten verfahren, und zwar soweit, daß das Gegenstück 74 den Mitnehmer 73 ergreift. Sobald dies geschehen ist, wird die Kupplung 86 über die Steuerleitung 87 geschlossen, wobei ein Grenzwert des Haltemomentes in der Kupplung 86 von bspw. 15 Nm eingestellt wird.

Durch Betätigen des Spindelantriebes 53 wird nun der Spindelrotor 50 und damit der Schlitten 62 und die Werkzeugaufnahme 67 verdreht. Da das Spreizglied 70 von der Kuppelstange 80 drehfest gehalten wird, bewegt sich das Spreizglied 70 über den durch die Gewindeabschnitte 71, 72 gebildeten Spindeltrieb nach oben und zieht den Werkzeughalter 68 in die Werkzeugaufnahme 67 ein.

Sobald das voreingestellte Drehmoment von z.B. 15 Nm erreicht ist, rastet die Ratschkupplung 86 aus. Dieser Ratschvorgang wird über den Sensor 88 erkannt und über die Steuerleitung 89 dem Steuerpult 17 mitgeteilt, worauf der Spindelantrieb 53 gestoppt wird.

Die Kupplung 86 wird nun wieder gelöst und die Kuppelstange 80 mittels der Kolben-Zylinder-Einheit 82 nach oben verfahren, so daß das Gegenstück 74 wieder außer Eingriff mit dem Mitnehmer 73 ist.

Das Plandrehwerkzeug 69 ist nun einsatzbereit. Je nach vorliegender Plandrehaufgabe wird das Plandrehwerkzeug 69 nun in radialer Richtung r verschoben. Hierzu wird der Zustellantrieb 105 über die Steuerleitung 106 angesteuert. Die vertikal feste Spindelmutter 101 wird über den Riementrieb 103, 104 verdreht und zieht die Kugelgewindespindel 100 nach oben oder nach unten. Die Kugelgewindespindel 100 nimmt über den Schlitten 93 die Zustellstange 90 in vertikaler Richtung mit. Die Gegenverzahnung 64 läuft nun auf der 45°-Verzahnung 63 des Schlittens 62, so daß dieser sich in Horizontalrichtung (Pfeil 66) verschiebt, bspw. in die in Fig. 2 eingezeichnete strichpunktierte Stellung 68', 69'. In dieser Stellung kann die Plandrehaufgabe ausgeführt werden.

Für einen nachfolgenden Werkzeugwechsel muß zunächst der Schlitten 62 auf der Schiene 61 wieder in eine Stellung verfahren werden, in der die Achse des Spreizgliedes 70 mit der Spindelachse 23 und damit der Kuppelstange 80 fluchtet. Dann können sich die vorstehend beschriebenen Vorgänge anschließen. Zum Ausspannen des Werkzeughalters 68 wird das Grenz-Drehmoment in der Kupplung 86 vorzugsweise höher eingestellt, z.B. auf 25 Nm, weil zum Lösen ein höheres Drehmoment erforderlich ist.

Wichtig dabei ist, daß der Plandrehkopf 60 erfindungsgemäß am Flansch 55 des Spindelrotors 50 verbleibt und nur die Plandrehwerkzeuge 69 ausgetauscht werden.

In den Fig. 3 und 4 sind nähere Einzelheiten des zugehörigen Werkzeugwechslers 27 dargestellt.

Der Werkzeugwechsler 27 umfaßt den Greifarm 25, der in herkömmlicher Weise als Parallelogrammgestänge ausgebildet ist. In Fig. 3 ist durchgezogen eine Arbeitsstellung und strichpunktiert eine Magazinstellung des Werkzeugwechslers 27 dargestellt.

Der Werkzeugwechsler 27 ist an seinem unteren freien Ende mit einem Greifer 110 versehen. Der Greifer 110 ergreift eine Greifnut 114 am Werkzeughalter 68. Mittels eines am Greifer 110 vorgesehenen Klemmsteins 115, der in die Greifnut 114 des erfaßten Werkzeughalters 68 greift, kann dieser gegen Vertikalbewegung gesichert werden. Der Klemmstein 115 liegt in der Greifnut 114 kontinuierlich unter der Wirkung einer Schraubenfeder 116 an. Mittels eines Hebels 117 kann die Feder 116 überdrückt und der Klemmstein 115 aus der Greifnut 114 abgehoben werden. Der Hebel 117 kann servomechanisch betätigt werden, vorzugsweise ist er aber als Handhebel ausgebildet.

Am rückwärtigen Ende des Greifers 110 ist eine Betätigungseinheit 120 angebracht, bspw. eine pneumatische, hydraulische oder elektromagnetische Betätigungseinheit. Die Betätigungseinheit 120 dient zum Betätigen zweier Klauen 121, 122, die symmetrisch in Achsen 123, 124 schwenkbar gehalten sind. Die Klauen 121, 122 können damit geöffnet werden, wie mit Pfeilen 125, 126 angedeutet, oder sie können dicht um den Werkzeughalter 68 herum gelegt werden. Weitere Einzelheiten der Betätigungseinheit eines solchen Greifers 110 sind z.B. in der EP 0 481 275 B1 beschrieben.

An dem in Fig. 1 oberen Umfang des Werkzeughalters 68 ist eine Rastnut 130 erkennbar. Der Rastnut 130 steht ein Raststein 131 gegenüber, der an der in Fig. 4 oberen Klaue 121 des Greifers 110 ausgebildet ist.

Die Wirkungsweise des in den Fig. 3 und 4 dargestellten Werkzeugwechslers 27 ist wie folgt:

Der Werkzeugwechsler 27 befindet sich zunächst in der in Fig. 3 strichpunktiert eingezeichneten Magazinstellung. Der Greifarm 25a ist in diesem Fall schräg nach oben und außen verschwenkt, so daß der Werkzeughalter 68a nach außen und nach oben vom Plandrehkopf 60 beabstandet ist. In dieser Stellung kann der Werkzeughalter 68a manuell bestückt werden, wenn eine neue Folge von Bearbeitungsvorgängen vorbereitet werden soll. Der Benutzer der Werkzeugmaschine betätigt dazu den Hebel 117, so daß bei geöffneten Klauen 121, 122 eine Entnahme des zuvor benutzten Werkzeughalters und eine Neubestückung mit dem für die nächste Bearbeitungsaufgabe erforderlichen Werkzeughalter 68a möglich ist.

Wenn im numerischen Steuerprogramm nun das betreffende Werkzeug aufgerufen wird, so wird der Werkzeughalter 27 aus der Magazinstellung in die Arbeitsstellung verschwenkt. Dabei wird der Werkzeughalter 68 zunächst der Werkzeugaufnahme 67 von unten angeboten, d.h. in eine Stellung gefahren, in der der Werkzeughalter 68 noch einen geringfügigen vertikalen Abstand zur Werkzeugaufnahme 67 hat.

Da die Anordnung in an sich bekannter Weise so getroffen ist, daß die Werkzeugaufnahme 67 in Vertikalrichtung relativ zum Werkzeugwechsler 27 verfahrbar ist, kann der Werkzeughalter 68 von unten in die Werkzeugaufnahme 67 eingefahren werden.

Während des bisher geschilderten Bewegungsablaufs ist es wichtig, daß der Werkzeughalter 68 in einer vorbestimmten Umfangsstellung gehalten wird. Dies wird dadurch bewirkt, daß bei geschlossenen Klauen 121, 122 der Raststein 131 in die Rastnut 130 greift, so daß der Werkzeughalter 68 in Umfangsrichtung fixiert ist. Diese Umfangs-Bezugsposition wird damit bereits während des Bestückens des Greifers 110 festgelegt. Zusätzlich ist der Werkzeughalter 68, wie erwähnt, in vertikaler Richtung mittels des Klemmsteins 115 fixiert, der in die Greifnut 114 eingreift.

Wenn nun der Werkzeughalter von unten in den Bereich der Werkzeugaufnahme 67 herangefahren wird, so gelangen formschlüssige Mitnahmeelemente, bspw. ein Nutenstein am Spindelrotor 50 und eine Nut in der oberen Radialfläche des Werkzeughalters 68 (jeweils nicht dargestellt), miteinander in Eingriff. Die definierte Umfangsstellung ist damit weiter gewährleistet. Die Klauen 121, 122 können dann mittels der Betätigungseinheit 120 geöffnet werden, wie in Fig. 4 dargestellt. Der Werkzeughalter 68 ist damit frei drehbar, aber in Vertikalrichtung immer noch fixiert, wofür das Zusammenspiel zwischen Werkzeugaufnahme 67/Hohlschaftkegel und Klemmstein 115/Greifnut 114 sorgt.

Nachdem sich der Werkzeughalter 68 in dieser Stellung befindet, beginnt der oben im Zusammenhang mit der Figur 2 bereits beschriebene Einkuppelvorgang, in dem nach dem Arretieren der Kuppelstange 80 der Spindelrotor 50 über die Spindel 13 die Werkzeugaufnahme 67 dreht, um das Spreizglied 70 anzuziehen. Da der Werkzeughalter 68 zu diesem Zeitpunkt bereits drehfest mit der Werkzeugaufnahme 67 gekuppelt ist, dreht sich die Werkzeugaufnahme 68 während dieses Spannvorganges mit, weshalb zuvor die Klauen 121, 122 geöffnet werden mußten.

Der Greifer 110 kann nun in dieser Stellung am Werkzeughalter 68 verbleiben, auch wenn dieser seine Bearbeitungsaufgabe durchführt. Alternativ ist es aber auch möglich, den Greifer 110 in Horizontalrichtung vom Werkzeughalter 68 weg zu fahren, so daß kein mechanischer Kontakt mehr vorhanden ist.

## Patentansprüche

1. Werkzeugmaschine mit mindestens einer Spindel (13) zur drehfesten Aufnahme von Werkzeugen (31), und mit in Richtung der Achse (23) der Spindel (13) beweglichen Spannmitteln (70-74, 80-89) zum Einspannen des Werkzeugs (31) in einer Werkzeugaufnahme (67) an der Spindel (13), dadurch gekennzeichnet, daß die Bewegung der Spannmittel (70-74, 80-89) in Richtung der Achse (23) durch Verdrehen der Spindel (13) bzw. ihres Spindelrotors (50) erzeugt wird.

2. Werkzeugmaschine nach Anspruch 1, dadurch gekennzeichnet, daß die Bewegung der Spannmittel (70-74, 80-89) in Richtung der Achse (23) über einen Spindeltrieb (71, 72) erzeugt wird, der durch Verdrehen der Spindel (13) bzw. ihres Spindelrotors (50) betätigbar ist.

3. Werkzeugmaschine nach Anspruch 2, dadurch gekennzeichnet, daß in der Werkzeugaufnahme (67) ein Spreizglied (70) zum formschlüssigen Ergreifen und Spannen des Werkzeugs (31) vorgesehen ist, und daß der Spindeltrieb vorzugsweise durch einen Außengewindeabschnitt (71) am Spreizglied (70) sowie einen Innengewindeabschnitt (72) an der Werkzeugaufnahme (67) gebildet wird, die drehfest mit der Spindel (13) bzw. dem Spindelrotor (50) verbunden ist.

4. Werkzeugmaschine nach Anspruch 2 oder Anspruch 3, dadurch gekennzeichnet, daß das Spreizglied (70) einen Mitnehmer (73) aufweist, über den vorzugsweise der Außengewindeabschnitt (71) relativ zu dem Innengewindeabschnitt (72) verdrehbar ist.

5. Werkzeugmaschine nach Anspruch 4, dadurch gekennzeichnet, daß der Mitnehmer (73) mit einer Kuppelstange (80) in Eingriff bringbar ist, die an einem Ende mit einem zum Mitnehmer (73) komplementären Gegenstück (74) versehen ist.

6. Werkzeugmaschine nach Anspruch 5, dadurch gekennzeichnet, daß die Kuppelstange (80) mittels einer Kolben-Zylinder-Einheit (82) axial verstellbar ist, derart, daß der Mitnehmer (73) und das Gegenstück (74) in Eingriff bzw. außer Eingriff bringbar sind.

7. Werkzeugmaschine nach Anspruch 6, dadurch gekennzeichnet, daß die Kuppelstange (80) in der Achse (23) der Spindel (13) angeordnet ist.

8. Werkzeugmaschine nach einem oder mehreren der Ansprüche 1 bis 6, dadurch gekennzeichnet, daß die Werkzeugaufnahme (67) an einem Plandrehkopf (60) ausgebildet und vorzugsweise numerisch gesteuert in einer Richtung (r) senkrecht zur Achse (23) der Spindel (13) verstellbar ist.

9. Werkzeugmaschine nach Anspruch 5 und 8, dadurch gekennzeichnet, daß der Plandrehkopf (60) derart verstellbar ist, daß der Mitnehmer (73) und das Gegenstück (74) in eine miteinander fluchtende Stellung bringbar sind.

10. Werkzeugmaschine nach einem oder mehreren der Ansprüche 3 bis 9, dadurch gekennzeichnet, daß das Spreizglied (70) drehfest fixierbar ist, derart, daß der Spindeltrieb durch Verdrehen der drehfest mit der Spindel (13) bzw. dem Spindelrotor (50) verbundenen Werkzeugaufnahme (67) betätigt wird.

11. Werkzeugmaschine nach Anspruch 5 und 10, dadurch gekennzeichnet, daß die Kuppelstange (80) mit einer Kupplung (86) zum wahlweisen drehfesten Arretieren der Kuppelstange (80) versehen ist.

12. Werkzeugmaschine nach Anspruch 11, dadurch gekennzeichnet, daß die Kupplung (86) eine Ratschkupplung mit einstellbarem Grenzwert des Halte-Drehmoments ist.

13. Werkzeugmaschine nach Anspruch 12, dadurch gekennzeichnet, daß die Kupplung (86) mit einem Sensor (88) zum Erkennen eines Ratschvorganges versehen ist.
